Europäisches Patentamt

European Patent Office

Office européen des brevets

(19)

(11) **EP 0 884 572 A1**

(12) # DEMANDE DE BREVET EUROPEEN

(43) Date de publication:
**16.12.1998 Bulletin 1998/51**

(51) Int Cl.⁶: **G01L 9/14**, G01L 19/00

(21) Numéro de dépôt: **98401198.1**

(22) Date de dépôt: **19.05.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.06.1997 FR 9707323**

(71) Demandeur: **Jaeger Regulation Société Anonyme**
**28000 Chartres (FR)**

(72) Inventeur: **Bognar, François**
**2800 Chartres (FR)**

(74) Mandataire: **Hurwic, Aleksander et al**
**Cabinet Orès S.A.,**
**6, Avenue de Messine**
**75008 Paris (FR)**

(54) **Capteur de mesure de pression.**

(57)     La présente invention se rapporte principalement à un capteur de mesure de pression.

Un capteur de pression (1) selon la présente invention comporte un détecteur à effet Hall (3) plongé dans un champ magnétique variable en fonction de la pression. Avantageusement, la variation du champ magnétique est influencée par un aimant (5,11), de préférence permanent, monté sur une pièce mobile (13,15). Avantageusement, la pièce mobile portant l'aimant est une membrane déformable par la pression à mesurer.

L'exemple préféré de réalisation d'un capteur selon l'invention comporte un premier aimant fixe (5) et un second aimant mobile (11), monté sur la membrane (15) de manière à ce qu'il s'approche du capteur à effet Hall (3) lorsque la pression augmente.

La présente invention s'applique à toute mesure de pression.

La présente invention s'applique principalement à l'industrie d'appareils électroménagers et notamment aux appareils comportant un circuit d'eau de chauffage. L'invention s'applique également à l'industrie automobile.

FIG. 1

EP 0 884 572 A1

## Description

La présente invention se rapporte principalement à un capteur de mesure de pression.

Le prix élevé des capteurs de précision de type connu interdit leur mise en oeuvre sur des appareils électroniques grand public, qui soit sont dépourvus d'appareils de mesure, soit comportent des capteurs peu précis et peu fidèles.

C'est par conséquent le but de la présente invention d'offrir un nouveau type de capteur de pression précis et fiable.

C'est également un but de la présente invention d'offrir un tel capteur présentant un faible prix de revient.

C'est aussi un but de la présente invention d'offrir un tel capteur susceptible d'être fabriqué en grande série.

C'est également un but de la présente invention d'offrir un dispositif de mesure comportant un tel capteur ainsi qu'une sonde de mesure de température.

C'est aussi un but de la présente invention d'offrir un tel capteur susceptible de fournir un signal d'alarme lorsque l'eau liquide manque dans un réservoir, notamment pressurisé.

Ces buts sont atteints par un capteur de pression selon la présente invention comportant un détecteur à effet Hall plongé dans un champ magnétique variable en fonction de la pression. Avantageusement, la variation du champ magnétique est influencée par un aimant, de préférence permanent, monté sur une pièce mobile. Avantageusement, la pièce mobile portant l'aimant est une membrane déformable par la pression à mesurer.

L'exemple préféré de réalisation d'un capteur selon l'invention comporte un premier aimant fixe et un second aimant mobile, monté sur la membrane de manière à ce qu'il s'approche du capteur à effet Hall lorsque la pression augmente.

L'invention a principalement pour objet un capteur de pression comportant des moyens d'induction de champ magnétique, un détecteur d'intensité de champ magnétique à effet Hall et un équipage mobile déplacé par la pression à mesurer solidarisé avec un aimant permanent modifiant, lorsqu'il se déplace sous l'action de la pression à mesurer, l'intensité du champ magnétique au point de mesure de l'intensité du champ du détecteur d'intensité de champ magnétique, caractérisé en ce qu'il comporte un deuxième aimant permanent fixe, le détecteur d'intensité de champ magnétique à effet Hall étant placé dans le champ magnétique induit par les deux aimants fixes.

L'invention a également pour objet un capteur, caractérisé en ce que les deux aimants permanents sont montés en opposition.

L'invention a aussi pour objet un capteur, caractérisé en ce que l'équipage mobile comporte une membrane déformable par la pression à mesurer.

L'invention a également pour objet un capteur, caractérisé en ce que l'équipage mobile déplacé par la pression à mesurer comporte un aimant.

L'invention a aussi pour objet un capteur, caractérisé en ce que les caractéristiques mécaniques non linéaires de déformation de la membrane en fonction de la pression à mesurer sont choisies de manière à compenser la variation non linéaire de l'intensité du champ magnétique au niveau du point de mesure du détecteur de l'intensité du champ magnétique lors du déplacement de l'aimant de l'équipage mobile dans la direction du détecteur de l'intensité du champ magnétique de manière à ce que la réponse du capteur, notamment la tension électrique délivrée, soit une fonction affine de la pression mesurée dans la gamme de mesure du capteur.

L'invention a également pour objet un capteur, caractérisé en ce que le ou les aimant(s) est(sont) cylindrique(s), l'axe du(des) cylindre(s) étant dirigé(s) vers le détecteur d'intensité du champ magnétique.

L'invention a aussi pour objet un capteur, caractérisé en ce que la membrane a subi un baptême en pression pendant lequel elle a été soumise à une pression entraînant une déformation plastique élargissant son domaine de déformation élastique.

L'invention a également pour objet un capteur, caractérisé en ce que la membrane délimite une cavité interne gonflable par la pression à mesurer.

L'invention a aussi pour objet un capteur, caractérisé en ce qu'il comporte des moyens électroniques d'amplification d'un signal électrique délivré par le détecteur d'intensité de champ magnétique.

L'invention a également pour objet un capteur, caractérisé en ce qu'il comporte en outre des moyens de mesure de température.

L'invention sera mieux comprise au moyen de la description ci-après et des figures annexées données comme des exemples non limitatifs et sur lesquels :

- la figure 1 est une vue en coupe axiale de l'exemple préféré de réalisation d'un capteur selon la présente invention ;
- la figure 2 est un schéma électrique du capteur de la figure 1;
- la figure 3 comporte trois schémas explicatifs illustrant le champ magnétique au niveau du capteur en fonction de la position de l'aimant mobile ;
- la figure 4 est une courbe illustrant l'induction magnétique en fonction de la pression ;
- la figure 5 est une courbe illustrant la tension en sortie du capteur à effet Hall en fonction de la pression à mesurer;
- la figure 6 est une courbe indiquant les déformations de l'exemple préféré de membrane selon la présente invention, en fonction des contraintes auxquelles elle est soumise ;
- la figure 7 est une courbe illustrant le déplacement d'une membrane en fonction de la pression ;
- la figure 8 est une courbe illustrant la tension en sortie du capteur à effet Hall pour un capteur de pression selon la présente invention non optimisé ;
- la figure 9 est une courbe analogue à la courbe de la figure 8 pour un capteur selon la présente invention optimisé.

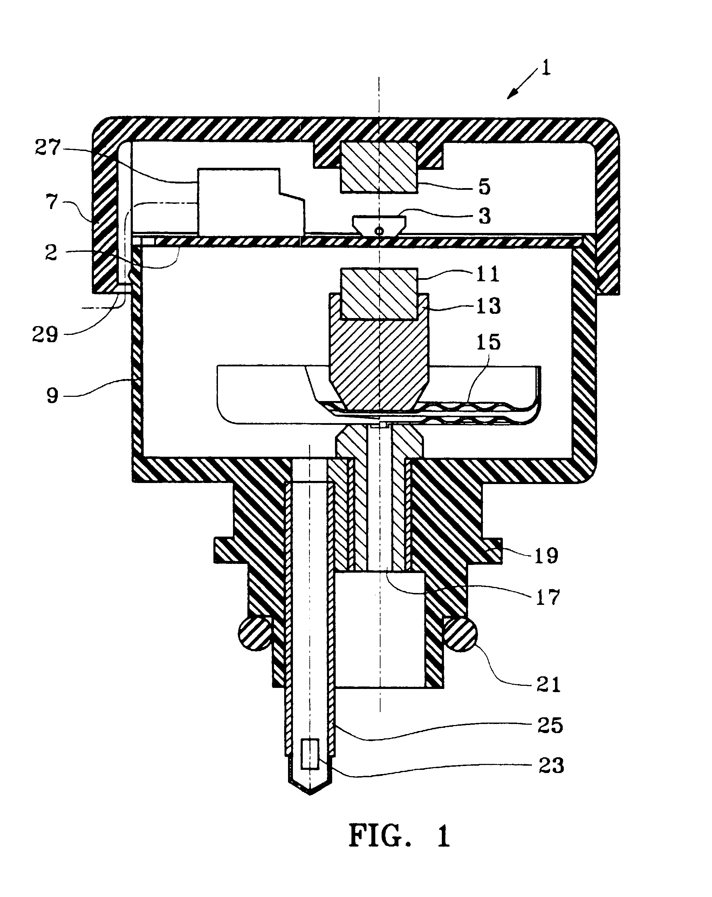

Sur les figures 1 à 9, on a utilisé les mêmes références pour désigner les mêmes éléments.

Sur la figure 1, on peut voir un capteur 1 selon la présente invention comportant un transducteur 3 à effet Hall disposé sur un circuit imprimé 2 et placé dans un champ magnétique induit par un premier aimant permanent 5 solidarisé avec un couvercle 7 d'un boîtier 9, et par un second aimant permanent 11 solidarisé avec une entretoise 13 elle-même fixée sur une membrane 15 déformable par la pression. Un canal 17 amène la pression jusqu'à la membrane 15. Le capteur 1 selon la présente invention comporte avantageusement des moyens 19 de fixation sur une ouverture, par exemple d'un réservoir de fluide sous pression, et un joint d'étanchéité 21, par exemple torique. Il peut s'avérer utile de munir le capteur 1 selon la présente invention d'une sonde de température 23 disposée au fond d'un tube 25 fermé à son extrémité, recevant la sonde de température 23.

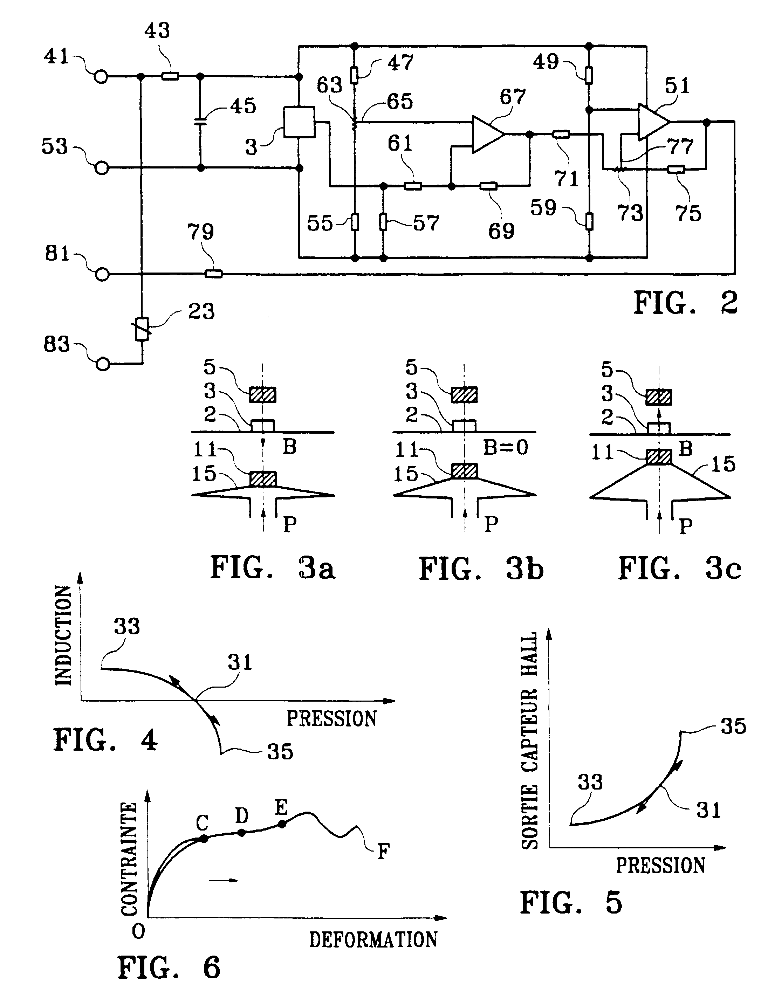

Le circuit imprimé 2 est muni d'un circuit d'amplification dont un exemple est illustré sur la figure 2. et d'un connecteur 27 susceptible de recevoir des câbles électriques (non représentés) susceptibles de passer par un passage de câble 29. Un câble (non représenté) relie la sonde de température 23 à l'amplificateur du circuit imprimé 2.

Le capteur 3 à effet Hall est avantageusement choisi dans une gamme grand public, par exemple du type de ceux utilisés dans l'industrie automobile. Avantageusement le capteur 3 a une sensibilité supérieure à 2,5 mV/gauss et une dérive en température quantifiable, de préférence inférieure à 10 %, sur la plage des températures de travail du capteur 1 selon la présente invention.

Les aimants sont avantageusement cylindriques, les axes des cylindres étant alignés et dirigés vers le capteur 3 à effet Hall. Ils sont réalisés, par exemple en terre rare, notamment en Samarium-Cobalt représentant une induction rémanente élevée (12.000 gauss), une force coercitive permettant une bonne résistance à la désaimantation ainsi qu'un facteur de dérive en température acceptable (0,1 %/°C).

Toutefois, de tels aimants présentent l'inconvénient d'un prix de revient élevé de par le matériau employé et par suite d'un usinage complexe. La mise en oeuvre d'aimants comportant des matériaux en terre rare, notamment en néodyme, fer et/ou bore dans un liant plastique commercialisé sous la dénomination "Bremag 10" permet de réduire le coût du matériau et de faciliter son usinage. Ces éléments ont une force d'attraction moyenne (Br = 6500 gauss) et une bonne stabilité thermique (0,11 %/°C).

Toutefois, il est bien entendu que la mise en oeuvre d'aimants ayant des formes autres que cylindriques, par exemple sphérique, hémisphérique, prismatique, en forme de plaque, de parallélépipède rectangle ou autre ne sort pas du cadre de la présente invention. De même, la présente invention n'est pas limité à l'emploi de deux aimants, mais s'étend à la mise en oeuvre d'au moins un aimant, la mise en oeuvre de trois, quatre aimants ou plus ou d'autres sources de champ magnétique ne sortant pas du cadre de la présente invention. Bien qu'il soit avantageux d'utiliser un aimant mobile solidarisé avec la membrane, la mise en oeuvre d'un détecteur de champ magnétique, notamment à effet Hall, solidarisé avec une membrane mobile associée à deux aimants fixes ne sort pas du cadre de la présente invention.

Dans l'exemple préféré de réalisation l'aimant se déplace par approche frontale vers le capteur 3 à effet Hall, c'est-à-dire qu'une augmentation de la pression provoque un déplacement de l'aimant en direction dudit capteur 3. La force magnétique B n'est pas linéaire en fonction du déplacement x. En effet :

$$B(x) = \frac{Br}{2} * \left[ \frac{L+x}{\sqrt{R^2 + (L+x^2)}} - \frac{x}{\sqrt{R^2 + x^2}} \right]$$

avec Br : induction rémanente en GAUSS

Br étant l'induction rémanente d'élément exprimé en gauss, R étant le rayon d'élément cylindrique, L étant la hauteur d'élément cylindrique et x étant la distance entre la face de l'aimant dirigé vers le point de mesure et ce point de mesure, typiquement le capteur à effet Hall.

Pour des distances x comprises entre 2 et 5 mm, cette formule peut être approximée par la formule :

$$B(x) = Bo*exp(-\alpha*x)$$

$$\text{avec } Bo = Br/2 * (L/(\sqrt{R^2+L^2})) \text{ et } \quad \alpha = 1/x0 * LN\left[\cfrac{L/\sqrt{R^2+L^2}}{\cfrac{L+x0}{\sqrt{R^2+(L+x0)^2}} - \cfrac{x0}{\sqrt{R^2+x0^2}}}\right]$$

Lors de la mise en oeuvre de deux aimants 5 et 11 en opposition, c'est-à-dire pôle sud dirigé vers le pôle sud ou pôle nord dirigé vers le pôle nord on obtient la formule :

$$B(x) = Br.exp(-\alpha.L/2) - Br.exp(-\alpha(x-L))$$

L'orientation du champ magnétique B au niveau du capteur 3 à effet Hall est illustré sur la figure 3.

Sur la figure 3a, la pression est nulle, l'aimant 11 est plus éloigné du capteur 3 que l'aimant 5. Le capteur 3 à effet Hall détecte un champ magnétique positif. En position médiane, illustré sur la figure 3b, le capteur 3 se trouve à mi-distance entre les aimants 5 et 11. Le champs magnétique s'annule au niveau du capteur 3.

En pression maximale, illustrée sur la figure 3c, l'élément 11 est plus proche du capteur 3 effet Hall que ne l'est l'aimant 5. Au niveau du capteur 3 effet Hall, le champ magnétique est négatif.

Sur la figure 4, on peut voir l'allure de la variation de l'induction magnétique au niveau du capteur 3 à effet Hall en fonction de la pression. Le point 31 correspond au cas de la figure 3b. Le point 33 correspond au cas de la figure 3a. Le point 35 correspond au cas de la figure 3c.

Sur la figure 5, on peut voir la tension en sortie du capteur 3 à effet Hall en fonction de la pression.

On peut voir, que la courbe théorique de sortie du capteur est sensiblement exponentielle croissante. Ce signal de sortie peut, sans sortir du cadre de la présente invention, être appliqué à un circuit extérieur, être compensé par un circuit électronique d'amplification ou, avantageusement, être compensé par le comportement non linéaire de la membrane 15. L'évolution non linéaire du système comportant la membrane 15, les aimants 5 et 11, et le capteur 3 dépend en majeure partie des facteurs suivants :

- l'étendue du domaine d'élasticité de la membrane 15 ;
- la linéarité du déplacement en direction du capteur 3 en fonction de la pression ;
- l'induction rémanente des aimants ;
- la géométrie des aimants, la distance entre les aimants 5 et 11 ;
- la linéarité de la réponse du capteur 3 effet Hall.

Sur la figure 6, on a illustré le comportement de contraintes induites dans une membrane 15, comportant une cavité interne gonflable par la pression à mesurer en fonction de la déformation. De telles membranes en acier inoxydable sont commercialisées par la Demanderesse pour des pressostats électromécaniques sous la dénomination PS. Entre l'origine O et le point C on est dans le domaine de déformation élastique, la courbe étant logarithmique ; entre le point C et le point E on est dans le domaine plastique, la courbe étant sensiblement linéaire croissante. Au delà du point E, on est dans le domaine de déformation permanente avec une rupture en F. Il s'avère que le domaine élastique peut être étendu jusqu'au point D médian entre les points C et E par un baptême en pression des membranes c'est-à-dire en mettant chaque membrane à une pression prédéterminée avant leur montage dans le capteur 1 selon la présente invention. De même, on peut jouer sur la distance sur les faces en vis-à-vis des aimants 5 et 11.

Il est bien entendu que la mise en oeuvre d'autres types de membranes 15, de pistons ou analogue, comme par exemple des membranes formant un disque serti à leur périphérie, ne sort pas du cadre de la présente invention. La membrane 15 du capteur 1 selon l'invention travaille dans son domaine élastique. En l'absence de pression, les forces élastiques de rappel la ramènent à la position illustrée à la figure 3a.

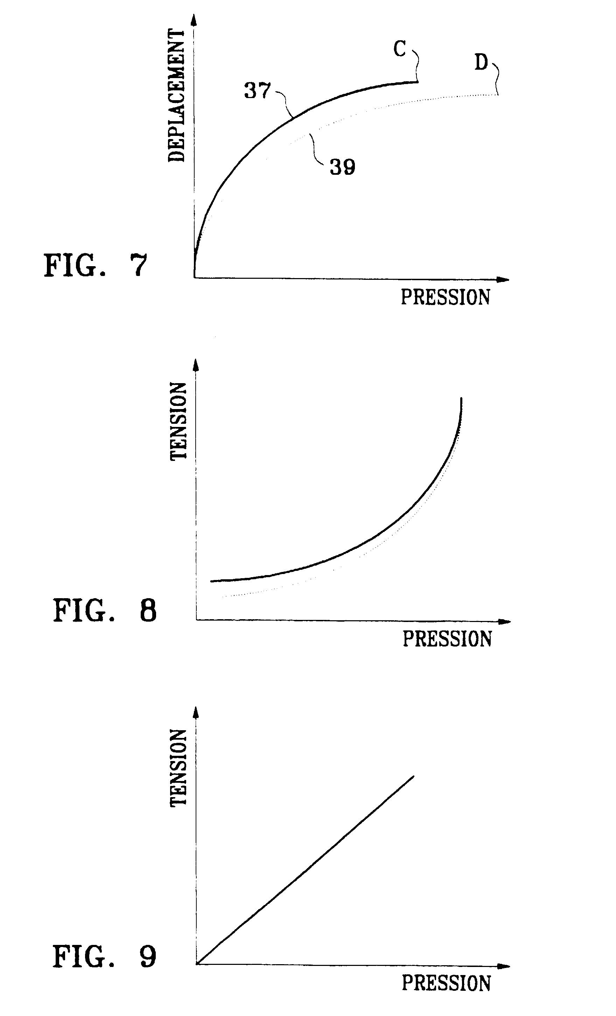

Sur la figure 7, on peut voir le déplacement frontal de la membrane en fonction de la pression. En 37, on peut voir la courbe d'une membrane n'ayant pas subi de baptême en pression. En 39, on peut voir une courbe correspondant a une membrane ayant subi un baptême en pression.

Sur la figure 8, on peut voir le signal de sortie du capteur 3 à effet Hall amplifié par le circuit d'amplification de la figure 2 en fonction de la pression pour une capteur de pression selon la présente invention non linéaire.

Sur la figure 9, on peut voir le signal pour un capteur optimisé pour lequel la non linéarité de la réponse de la membrane compense la non linéarité de la force magnétique induite dans le capteur à effet Hall. Cette optimisation s'effectue par une déformation de plastique de la membrane 15 jusqu'au point E (figure 6), on obtient ainsi une membrane à domaine élastique élargi dont on connaît la courbe de réponse illustrée sur la figure 7.

Toutefois, il est bien entendu que la mise en oeuvre de membrane n'ayant jamais subi de baptême en pression avec ou sans compensation de la variation non linéaire de la force magnétique en fonction de la distance des éléments 11 par rapport au capteur 3 effet Hall, ne sort pas du cadre de la présente invention.

On effectue ensuite le choix des aimants et notamment de leur géométrie, la distance qui les sépare au repos, de manière à obtenir une opposition de phase à celle de la courbe élastique de la membrane de la figure 7. La transposition du champ magnétique ainsi compensé en tension s'effectue avec une bonne linéarité, typiquement plus ou moins à 1 % par des capteurs 3 à effet Hall du commerce.

Le boîtier est adapté à l'application envisagée du capteur 1 selon la présente invention. Par exemple un capteur devant supporter une immersion dans de l'eau à 100°C tout en gardant des bonnes propriétés d'étanchéité met en oeuvre une sonde surmoulée.

Sur la figure 2, on peut voir un exemple préféré de réalisation d'un circuit électronique implanté sur le circuit imprimé 2. Un point d'alimentation 41 est relié d'une part à l'entrée d'une résistance 43 et, d'autre part à une première borne de la sonde de température 23, notamment d'une thermistance.

La sortie de la résistance 43 est connectée à une première armature d'un condensateur 45, à une première centrée du capteur à effet Hall 3, à l'entrée d'une résistance 47, à l'entrée d'une résistance 49 et à l'entrée de commande d'un amplificateur opérationnel 51. Une borne de masse 53 est reliée à la seconde armature du condensateur 45, à une deuxième entrée du capteur à effet Hall 3 à l'entrée d'une résistance 55, à l'entrée d'une résistance 57, à l'entrée d'une résistance 59 et à une deuxième entrée de commande de l'amplificateur opérationnel 51. Une troisième borne du capteur à effet Hall 3 est reliée à la sortie de la résistance 57 et à l'entrée d'une résistance 61. Les sorties des résistances 47 et 55 sont reliées aux extrémités opposées d'un potentiomètre 63 dont la sortie 65 est reliée à une première entrée d'un amplificateur opérationnel 67. La sortie de la résistance 61 est reliée d'une part à une seconde entrée de l'amplificateur opérationnel 67 et à l'entrée d'une résistance 69. La sortie de la résistance 69 est reliée à la sortie de l'amplificateur opérationnel 67 et à l'entrée d'une résistance 71. Les sorties de résistance 49 et 59 sont reliées à une entrée de l'amplificateur opérationnel 51 La sortie de la résistance 71 est reliée à une première extrémité d'un potentiomètre 73 dont la seconde extrémité est connectée à l'entrée d'une résistance 75. La sortie 77 du potentiomètre 73 est reliée à une entrée de l'amplificateur opérationnel 51. La sortie de la résistance 75 est reliée à la sortie de l'amplificateur opérationnel 51 et à l'entrée d'une résistance 79. La sortie 81 de la résistance 79 délivre une tension qui est une fonction, avantageusement affine, ou tout au moins linéaire, de la pression mesurée. La sortie de la thermistance 23 est reliée à une borne 83 délivrant un signal de température.

Les potentiometres 63 et/ou 73 permettent le calibrage du gain du circuit d'amplification assurant une excellente répétabilité des capteurs de pression selon la présente invention.

En effet. la courbe de transfert de la détection s'apparente à une exponentielle. Or, une des propriétés fondamentales de la fonction exponentielle est l'homothétie entre deux tronçons tels que :

$$Bo*exp(-\alpha(x+x0)) = K * Bo *exp(-\alpha*x)$$

(si $K = exp(-\alpha*x)$ = constante)

Dans l'exemple préféré de réalisation, mettant en oeuvre des composants montés en surface (CMS en terminologie anglo-saxonne), on a utilisé les composants suivants :

- résistance 43 :          10 Ω
- résistance 47 :          100 Ω
- résistance 49 :          100 kΩ
- résistance 55 :          215 kΩ
- résistance 57 :          2,2 kΩ
- résistance 59 :          100 kΩ
- résistance 61 :          100 kΩ
- résistance 71 :          100 kΩ
- résistance 75 :          310 kΩ
- résistance 79 :          100 Ω
- potentiométre 63 :          100 kΩ
- potentiomètre 73 :           100 kΩ
- condensateur 45 :          100 nF
- capteur à effet Hall 3 :          UGN35034

- thermistance 23 : 10 kΩ à 25°C
- amplificateurs 51 et 67 : MC 33172CMS

Il est bien entendu que le circuit de la figure 2 peut être complété par des moyens d'affichage de la pression et/ou de la température mesurées ou bien des moyens d'exploitation, par exemple des moyens de commande d'une résistance de puissance ou d'un actionneur. De même, le circuit de la figure 2 peut délivrer un signal lorsque les conditions de température et/ou de pression correspondent à un manque d'eau liquide, notamment dans un réservoir, ces conditions correspondant par exemple à une baisse de la surpression interne à un réservoir pressurisé à $5 \cdot 10^4$ Pa.

Le dispositif selon la présente invention a par exemple une plage de mesure entre $25 \cdot 10^3$ Pa et $5 \cdot 10^5$ Pa.

Un exemple de capteur selon la présente invention avec compensation de la non linéarité de variation du champ magnétique au niveau du capteur lors du déplacement frontal de l'aimant par le comportement non linéaire de la membrane est décrit ci-après.

Membrane :
en acier inoxydable,
de 0.15 mm d'épaisseur,
de 27 mm de diamètre,
présentant un déplacement de 0,3 mm/$10^5$ Pa,
baptisée en pression à $9 \times 10^5$Pa

Aimant :
induction rémanente Br = 6800 Gauss dérive en température $\delta = 0,11$ %/°C champs coercitif intrinsec Hcj = 9050 oe
Géométrie du capteur de pression :
Distance aimant 5 - capteur à effet Hall 3 :
3 mm de part et d'autre à $2,5 \times 10^5$ Pa
Distance capteur à effet Hall 3 - aimant 11 au repos :
3,78 mm à 0 Pa ;
Distance capteur à effet Hall 3 - aimant 11 pour la pression maximale de service : 2,45 mm à $5 \times 10^5$ Pa.

La présente invention s'applique à toute mesure de pression.

La présente invention s'applique principalement à l'industrie d'appareils électroménagers et notamment aux appareils comportant un circuit d'eau de chauffage. L'invention s'applique également à l'industrie automobile.

**Revendications**

1. Capteur de pression comportant des moyens (5,11) d'induction de champ magnétique, un détecteur (3) d'intensité de champ magnétique à effet Hall et un équipage mobile (11,13,15) déplacé par la pression à mesurer solidarisé avec un aimant permanent (11) modifiant, lorsqu'il (11,13,15) se déplace sous l'action de la pression à mesurer, l'intensité du champ magnétique au point de mesure de l'intensité du champ du détecteur (3) d'intensité de champ magnétique, caractérisé en ce qu'il comporte un deuxième aimant permanent (5) fixe, le détecteur (3) d'intensité de champ magnétique à effet Hall étant placé dans le champ magnétique induit par les deux aimants fixes (5,11).

2. Capteur selon la revendication 1, caractérisé en ce que les deux aimants permanents (5,11) sont montés en opposition.

3. Capteur selon la revendication 1 ou 2, caractérisé en ce que l'équipage mobile comporte une membrane (15) déformable par la pression à mesurer.

4. Capteur selon la revendication 2 ou 3, caractérisé en ce que l'équipage mobile déplacé par la pression à mesurer comporte un aimant (11).

5. Capteur selon la revendication 4, caractérisé en ce que les caractéristiques mécaniques non linéaires de déformation de la membrane en fonction de la pression à mesurer sont choisies de manière à compenser la variation non linéaire de l'intensité du champ magnétique au niveau du point de mesure du détecteur (3) de l'intensité du champ magnétique lors du déplacement de l'aimant (11) de l'équipage mobile dans la direction du détecteur (3) de l'intensité du champ magnétique de manière à ce que la réponse du capteur (1), notamment la tension électrique délivrée, soit une fonction affine de la pression mesurée dans la gamme de mesure du capteur.

**6.** Capteur selon l'une quelconque des revendications 2 à 5, caractérisé en ce que le ou les aimant(s) est(sont) cylindrique(s), l'axe du(des) cylindre(s) étant dirigé(s) vers le détecteur (3) d'intensité du champ magnétique.

**7.** Capteur selon l'une quelconque des revendications 3 à 6, caractérisé en ce que la membrane (15) a subi un baptême en pression pendant lequel elle a été soumise à une pression entraînant une déformation plastique élargissant son domaine de déformation élastique.

**8.** Capteur selon l'une quelconque des revendications 3 à 7, caractérisé en ce que la membrane (15) délimite une cavité interne gonflable par la pression à mesurer.

**9.** Capteur selon l'une quelconque des revendications précédentes, caractérisé en ce qu'il comporte des moyens (2) électroniques d'amplification d'un signal électrique délivré par le détecteur (3) d'intensité de champ magnétique.

**10.** Capteur selon l'une quelconque des revendications précédentes, caractérisé en ce qu'il comporte en outre des moyens (23) de mesure de température.

FIG. 1

FIG. 2

FIG. 3a

FIG. 3b

FIG. 3c

FIG. 4

FIG. 5

FIG. 6

FIG. 7

DEPLACEMENT

37

C

D

39

PRESSION

FIG. 8

TENSION

PRESSION

FIG. 9

TENSION

PRESSION

**Office européen des brevets**

# RAPPORT DE RECHERCHE EUROPEENNE

Numéro de la demande

EP 98 40 1198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR 2 437 614 A (BOSCH GMBH ROBERT) 25 avril 1980 | 1-4,6,8 | G01L9/14 G01L19/00 |
| Y | * le document en entier * | 7,9,10 | |
| X | WO 82 01068 A (BOSCH GMBH ROBERT ;BALCKE G (DE); NEU H (DE); HERDEN W (DE)) 1 avril 1982 * revendication 1; figure 1 * | 1 | |
| Y | EP 0 088 270 A (BOSCH GMBH ROBERT) 14 septembre 1983 | 9 | |
| A | * page 3 - page 4; figure 1 * | 8 | |
| Y | EP 0 514 569 A (SIEMENS AG) 25 novembre 1992 * colonne 2, ligne 48 - ligne 52 * | 7 | |
| A | US 4 484 173 A (EVERETT CHARLES J) 20 novembre 1984 * le document en entier * | 1 | |
| | | | **DOMAINES TECHNIQUES RECHERCHES (Int.Cl.6)** |
| Y | US 5 111 698 A (BANHOLZER KARLHEINZ ET AL) 12 mai 1992 * abrégé; figure * | 10 | G01L |

Le présent rapport a été établi pour toutes les revendications

| Lieu de la recherche | Date d'achèvement de la recherche | Examinateur |
|---|---|---|
| LA HAYE | 23 septembre 1998 | Zafiropoulos, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)